# EUROPÄISCHE PATENTANMELDUNG

(11) **EP 1 188 614 A1**
(43) Veröffentlichungstag der Anmeldung: **20.03.2002**
(21) Anmeldenummer: 01122044.9
(22) Anmeldetag: 13.09.2001
(51) Int. Cl.: B60P 1/44

(54) **Hubladebühnenvorrichtung, insbesondere für Fahrzeuge**

(30) Priorität: 14.09.2000 DE 10046090
(71) Anmelder: DAUTEL GMBH, D-74211 Leingarten (DE)
(72) Erfinder: Petzel-Gligaria, Gabriel, 74078 Heilbronn-Neckargartach (DE); Wild, Rolf, 74912 Kirchardt (DE); Dautel, Peter, Dr., 74223 Flein (DE)
(74) Vertreter: Clemens, Gerhard, Dr.-Ing.

(57) **Zusammenfassung**

Eine Hubladebühnenvorrichtung (10.1), insbesondere für Fahrzeuge, mit einer Ladeplattform (12), zumindest einem zwischen der Ladeplattform (12) und einer Trageinrichtung (20) eines Fahrzeugs angeordneten 4-Gelenkmechanismus (14) mit einem Oberarm (16), der über ein erstes Gelenk (40) an die Ladeplattform (12) und über ein zweites Gelenk (42) an die Trageinrichtung (20) direkt oder indirekt angelenkt ist, und einem Unterarm (18), der über ein drittes Gelenk (50) an die Ladeplattform (12) und über ein viertes Gelenk (52) an die Trageinrichtung (20) direkt oder indirekt angelenkt ist, wobei die Bewegung der Ladeplattform (12) - Öffnen, Schließen, Heben, Senken - über auf den Gelenkmechanismus (14) einwirkende, ansteuerbare Kolben-Zylinder-Aggregate (22) bewirkt wird, zeichnet sich dadurch aus, dass jeweils nur ein einziges Kolben-Zylinder-Aggregat (22) pro Gelenkmechanismus (14) vorhanden ist, das die Öffnungs- beziehungsweise Schließbewegung und die Senk- beziehungsweise Hebebewegung bewirkt.

## Beschreibung

### TECHNISCHES GEBIET

Die vorliegende Erfindung betrifft eine Hubladebühnenvorrichtung, insbesondere für Fahrzeuge, mit einer Ladeplattform, zumindest einem zwischen der Ladeplattform und einer Trageinrichtung eines Fahrzeugs angeordneten 4-Gelenkmechanismus mit einem Oberarm, der über ein erstes Gelenk an die Ladeplattform und über ein zweites Gelenk an die Trageinrichtung direkt oder indirekt angelenkt ist, und einem Unterarm, der über ein drittes Gelenk an die Ladeplattform und über ein viertes Gelenk an die Trageinrichtung direkt oder indirekt angelenkt ist, wobei die Bewegung der Ladeplattform - Öffnen, Schließen, Heben, Senken - über auf den Gelenkmechanismus einwirkende, ansteuerbare Kolben-Zylinder-Aggregate bewirkt wird und jeweils nur ein einziges Kolben-Zylinder-Aggregat pro Gelenkmechanismus vorhanden ist, das die Öffnungsbeziehungsweise Schließbewegung und die Senkbeziehungsweise Hebebewegung bewirkt.

Derartige Ladevorrichtung-Konstruktionen müssen hinsichtlich der vielen unterschiedlichen Fahrzeugtypen, an die die Vorrichtungen montiert werden, und hinsichtlich der unterschiedlichen Einsatzfälle die verschiedensten Funktionen und Bewegungen ausführen können. Insbesondere im Hinblick auf die Bedienung durch nur eine Person, zum Beispiel durch den Fahrer, auf die Sicherheitsvorschriften sowie auf die Wirtschaftlichkeit werden hohe Anforderungen gestellt. Dabei ergeben sich viele Probleme, die einerseits mechanisch und andererseits hydraulisch zu lösen sind, wobei jeweils abzuwägen ist, ob man aus Funktionsgründen, Kostengründen und Sicherheitsgründen mehr einer kinematischen Lösung oder mehr einer hydraulischen Lösung zuneigt.

### STAND DER TECHNIK

Aus der deutschen Patentschrift 33 45 589 ist eine Hubladebühne der eingangs genannten Art bekannt. Bei einer derartigen Hubladebühne sind zwei symmetrisch zur Längsachse und parallel beabstandete Gelenkmechanismen vorhanden, wobei auf den einen Gelenkmechanismus ein Hub-Zylinder-Aggregat zum Heben und Senken der Ladeplattform einwirkt und auf der anderen Seite ein Neigungs-Zylinder-Aggregat vorhanden ist zum Öffnen beziehungsweise Schießen der Hubladebühne. Weiterhin ist bekannt, den Öffnungs- und Schließvorgang auch manuell durchzuführen.

Bei den bekannten zwei Zylinder-Hubladebühnen (ein Zylinder zum Öffnen und Schließen und ein Zylinder zum Heben und Senken) stellt sich das Problem ein, dass beim Heben und Senken unter Last infolge des einseitigen Angriffs des HubZylinder-Aggregats unsymmetrische Last- beziehungsweise Kraftverhältnisse vorliegen. Dadurch kommt es zu Verformungen unter Last, was durch zusätzliche aufwendige mechanische Merkmale, beispielsweise Einsatz eines Torsionsrohres, kompensiert werden muss.

In der DE-22 50 562 B2 ist eine Hubladebühnenvorrichtung der eingangs genannten Art beschrieben. Bei dieser Hubladebühne werden sämtliche Bewegungsabläufe am Tragsystem mit einem Arbeitszylinder durchgeführt, ohne dass es für bestimmte Bewegungsabläufe einer zusätzlichen und schwer zu bedienenden Verriegelung der Plattform bedarf. Hierzu wird ein teleskopierbarer Parallelogrammarm eingesetzt, der mittels einer Klinke gegen teleskopisches Ein- und Ausfahren sicherbar ist. Zum Heben und Senken ist der Parallelogrammarm mittels der Klinke gegen Ausfahren gesichert. Sobald die angehobene Position der Plattform zu Beginn des Schwenkens erreicht ist, wird die Klinke automatisch entsperrt und die Plattform kann dadurch, dass der Parallelogrammarm ausfahren kann, in die vertikale Position durch weiteres Ausfahren des Arbeitszylinders geschwenkt werden.

### DARSTELLUNG DER ERFINDUNG

Ausgehend von dem genannten Stand der Technik liegt der vorliegenden Erfindung die Aufgabe beziehungsweise das technische Problem zugrunde, eine Hubladebühnenvorrichtung anzugeben, die eine extrem einfache und leichte Ausführung ermöglicht, eine dauerhaft zuverlässige Funktion gewährleistet und eine wirtschaftliche Herstellung ermöglicht.

Die erfindungsgemäße Hubladebühnenvorrichtung ist durch die Merkmale des unabhängigen Anspruchs 1 gegeben.

Vorteilhafte Ausgestaltungen und Weiterbildungen sind Gegenstand der abhängigen Ansprüche.

Die erfindungsgemäße Hubladebühnenvorrichtung zeichnet sich demgemäß dadurch aus, dass das Kolben-Zylinder-Aggregat über ein fünftes Gelenk an den Unterarm und über ein sechstes Gelenk an die Trageinrichtung direkt oder indirekt angelenkt ist und das vierte Gelenk des Unterarms während der Hebebeziehungsweise Senkbewegung der Ladeplattform gegen einen Anschlag gepresst wird und während der Schließbeziehungsweise Öffnungsbewegung der Ladeplattform bewegbar ausgebildet ist, wobei das vierte Gelenk des Unterarms an einer an der Trageinrichtung direkt oder indirekt drehbar um ein achtes Gelenk gelagerten Schließkonsole angeordnet ist, wobei die Drehung der Schließkonsole nur während der Öffnungs- beziehungsweise Schließbewegung der Ladeplattform möglich ist und die Schließkonsole während der Hebebeziehungsweise Senkbewegung gegen einen Anschlag gepresst wird, oder das vierte Gelenk des Unterarms in einem Langloch einer fest an der Trageinrichtung angeschlossenen Schließkonsole gelagert ist, wobei die Verschiebung des vierten Gelenks innerhalb des Langlochs nur während der Öffnungs- beziehungsweise Schließbewegung der Ladeplattform möglich ist und das vierte Gelenk bei der Hebebeziehungsweise Schließbewegung der Ladeplattform gegen einen Anschlag gepresst wird.

Um die optimale Funktion im praktischen Betrieb zu gewährleisten, das heißt auch ein automatisches Absenken der Ladeplattformspitze beim Aufsetzen auf dem Boden zu ermöglichen, zeichnet sich eine besonders vorteilhafte Ausführungsvariante dadurch aus, dass eine um ein siebtes Gelenk drehbar an der Trageinrichtung gelagerte Gelenkkonsole vorhanden ist, an der das sechste Gelenk des Kolben-Zylinder-Aggregats angeschlossen ist, wobei während der Öffnungs- beziehungsweise Schließbewegung der Ladeplattform die Gelenkkonsole gegen einen zweiten Anschlag gepresst wird und die Drehbarkeit der Gelenkkonsole bei auf den Boden abgesenkter Ladeplattform möglich ist zum Absenken der Spitze der Ladeplattform unter Eigengewicht beziehungsweise Last.

Je nach konstruktiv vorgegebenen Raumverhältnissen kann das siebte Gelenk und das achte Gelenk jeweils getrennt an der Trageinrichtung beziehungsweise an einer Gelenklagereinheit angeordnet sein oder es ist auch möglich, dass das siebte und achte Gelenk in einem gemeinsamen Gelenk an der Trageinrichtung oder an einer Gelenklagereinheit vorhanden sind.

Hinsichtlich einer wirtschaftlichen Herstellung zeichnet sich eine besonders vorteilhafte Ausgestaltung dadurch aus, dass zwei symmetrische zur Längsachse des Fahrzeugs parallel beabstandet angeordnete Gelenkmechanismen mit jeweils einem Kolben-Zylinder-Aggregat vorhanden sind.

Das Kolben-Zylinder-Aggregat ist bevorzugt als Zug-/Druck-Zylinder ausgebildet, das in bewährter Art und Weise hydraulisch betreibbar ausgebildet sein kann.

Mit der erfindungsgemäßen Hubladebühnenvorrichtung steht eine extrem einfache und leichte Ausführung zur Verfügung, die hinsichtlich ihrer Herstellung enorme wirtschaftliche Vorteile mit sich bringt. Dadurch, dass gemäß einer bevorzugten Ausgestaltung symmetrisch zur Längsachse bei jedem Gelenkmechanismus jeweils ein Hubzylinder vorhanden ist, entfällt das Problem der einseitigen Krafteinleitung. Somit können aufwendige zusätzliche mechanische Bauteile, die der Verformung unter Last bei den bekannten Hubladebühnenvorrichtungen entgegenwirken, vollständig entfallen. Darüber hinaus ist als besonderer Vorteil hervorzuheben, dass je nach konstruktiven geometrischen Verhältnissen des Fahrzeugs unterschiedliche Anbauwinkel problemlos möglich sind.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematisches statisches System einer ersten Ausführungsvariante einer Hubladebühnenvorrichtung mit Anschluss des Unterarms eines Gelenkmechanismus an eine drehbare Schließkonsole und Anschluss des Kolben-Zylinder-Aggregats an eine drehbare Gelenkkonsole in geschlossenem Zustand,
- Fig. 2: schematisches statisches System der Vorrichtung gemäß Fig. 1 in geöffnetem, nicht abgesenktem Zustand,
- Fig. 3: schematische Darstellung einer konstruktiven Umsetzung des statischen Systems gemäß Fig. 1,
- Fig. 4: schematische Darstellung der konstruktiven Umsetzung gemäß Fig. 3 entsprechend der Darstellung gemäß Fig. 2 mit zusätzlicher herausgezogener Darstellung von Einzelbauteilen,
- Fig. 5: schematische Darstellung der Konstruktion gemäß den Fig. 3 und 4 in abgesenktem Zustand,
- Fig. 6: schematische Darstellung der Konstruktion gemäß Fig. 5 bei abgesenkter Spitze der Ladeplattform,
- Fig. 7a: schematische Seitenansicht des Unterarms gemäß der Konstruktion in Fig. 3,
- Fig. 7b: schematische Draufsicht auf den Unterarm gemäß Fig. 7a,
- Fig. 8a: schematische Seitenansicht des Oberarms gemäß der Konstruktion in Fig. 3,
- Fig. 8b: schematische Draufsicht auf den Oberarm gemäß Fig. 8a,
- Fig. 9a: schematische Vorderansicht einer Schließkonsole gemäß Ausführungsbeispiel von Fig. 3,
- Fig. 9b: schematische Seitenansicht der Schließkonsole gemäß Fig. 9a,
- Fig. 10a: schematische Stirnansicht eines Kolben-Zylinder-Aggregats,
- Fig. 10b: schematische Seitenansicht des Kolben-Zylinder-Aggregats gemäß Fig. 10a,
- Fig. 11a: schematische Detailstirnansicht einer Konstruktion gemäß Fig. 3 ohne Darstellung der Konsolen,
- Fig. 11b: schematische Detailseitenansicht der Konstruktion gemäß Fig. 11a,
- Fig. 12a: schematische Stirnansicht der Konstruktion gemäß Fig. 3 mit eingebauten Konsolen,
- Fig. 12b: schematische Stirnansicht der Gelenkkonsole der Konstruktion gemäß Fig. 3,
- Fig. 12c: schematische Seitenansicht der Gelenkkonsole gemäß Fig. 12b,
- Fig. 13: schematisches statisches System einer zweiten Ausführungsvariante einer Hubladebühnenvorrichtung mit Anschluss des Unterarms eines Gelenkmechanismus an eine drehbare Schließkonsole und Anschluss des Kolben-Zylinder-Aggregats an eine drehbare Gelenkkonsole in geschlossenem Zustand mit gemeinsamem Drehpunkt der Konsolen mit schematischer Alternativdarstellung einer feststehenden Schließkonsole mit Langloch in geschlossenem Zustand,
- Fig. 14: schematisches statisches System der Vorrichtung gemäß Fig. 13 in geöffnetem, nicht abgesenktem Zustand,
- Fig. 15: schematisches statisches System der Vorrichtung gemäß Fig. 13 in abgesenktem Zustand,
- Fig. 16: schematisches statisches System der Vorrichtung gemäß Fig. 13 in abgesenktem Zustand mit abgesenkter Spitze der Ladeplattform,
- Fig. 17: die konstruktive Umsetzung des statischen Systems gemäß Fig. 13 mit einer Schließkonsole mit Langloch in geschlossenem Zustand,
- Fig. 18: schematisches statisches System der Konstruktion gemäß Fig. 17 in geöffnetem, nicht abgesenktem Zustand der Ladeplattform und zusätzlich dargestellter Schließkonsole mit Langloch und Gelenkkonsole.

### WEGE ZUM AUSFÜHREN DER ERFINDUNG

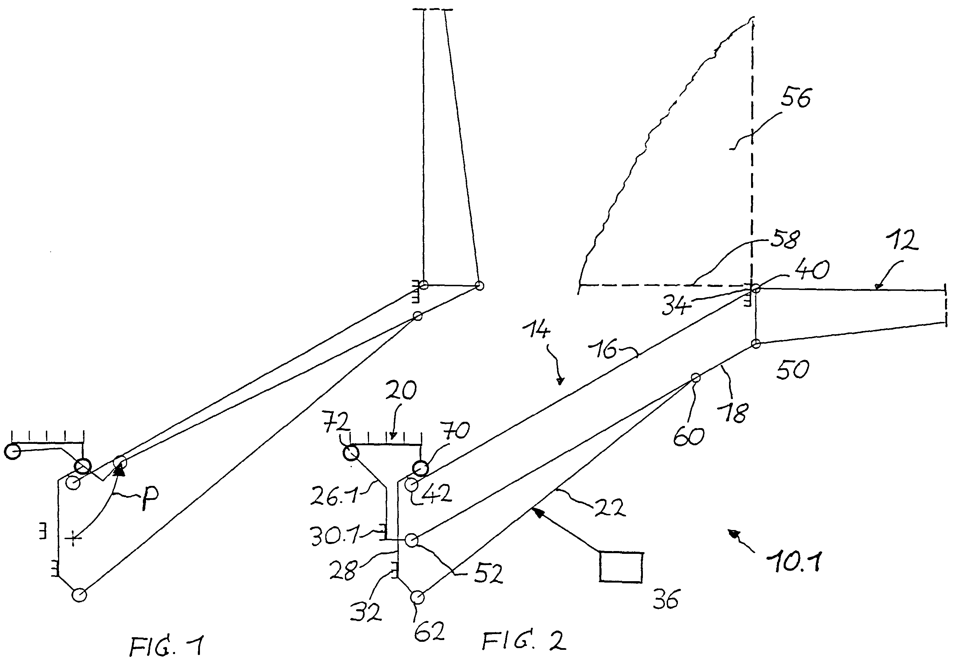

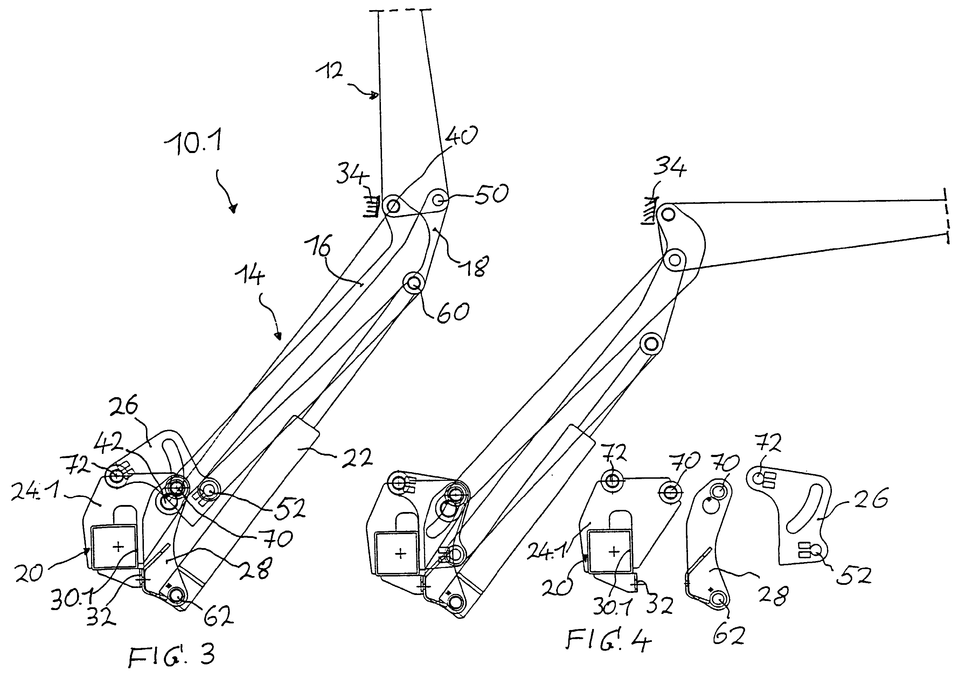

Die Figuren 1 und 2 zeigen ein statisches System einer ersten Ausführungsvariante einer Hubladebühnenvorrichtung 10.1 und die Figuren 3 bis 12 zeigen deren konstruktive Umsetzung.

Gemäß der schematischen Darstellung des statischen Systems in Figur 2 besitzt die Hubladebühnenvorrichtung 10.1 eine Ladeplattform 12, die zu ihrem freien Ende hin spitz zuläuft. Zwischen der Ladeplattform 12 und dem in den Figuren nicht näher dargestellten Fahrzeug, das eine schematisch dargestellte Trageinrichtung 20 aufweist, ist ein 4-Gelenkmechanismus 14 angeordnet, der gemäß Figur 2 parallelogrammartig ausgebildet ist. Von dem Fahrzeug ist in Figur 2 lediglich der hintere obere Aufbau 56 mit Ladefläche 58 ausschnittsweise gestrichelt dargestellt. Der 4-Gelenkmechanismus 14 weist einen Oberarm 16 auf, der über ein erstes Gelenk 40 oberseitig an der Ladeplattform 12 angelenkt ist. An seinem anderen Ende ist der Oberarm 16 über ein zweites Gelenk 42 an einer Gelenkkonsole 28 angelenkt, die wiederum über ein siebtes Gelenk 70 an der Trageinrichtung 20 angelenkt ist. Parallel beabstandet zum Oberarm 16 ist unterseitig ein Unterarm 18 vorhanden, der wiederum unterseitig an der Ladeplattform 12 über ein drittes Gelenk 50 an der Ladeplattform 12 angelenkt ist und im anderen Endbereich über ein viertes Gelenk 52 an eine Schließkonsole 26.1 angelenkt ist, die wiederum über ein achtes Gelenk 72 an der Trageinrichtung 20 angelenkt ist.

Unterseitig ist an den Unterarm 18 über ein fünftes Gelenk 60 ein Kolben-Zylinder-Aggregat 22 angelenkt, das als Zug-/Druck-Zylinder-Aggregat ausgebildet ist, dessen Hubweg durch eine in Figur 2 schematisch dargestellte Steuereinrichtung 36 steuerbar ist. Das untere Ende des Kolben-Zylinder-Aggregats 22 ist über ein sechstes Gelenk 62 an die Gelenkkonsole 28 angeschlossen.

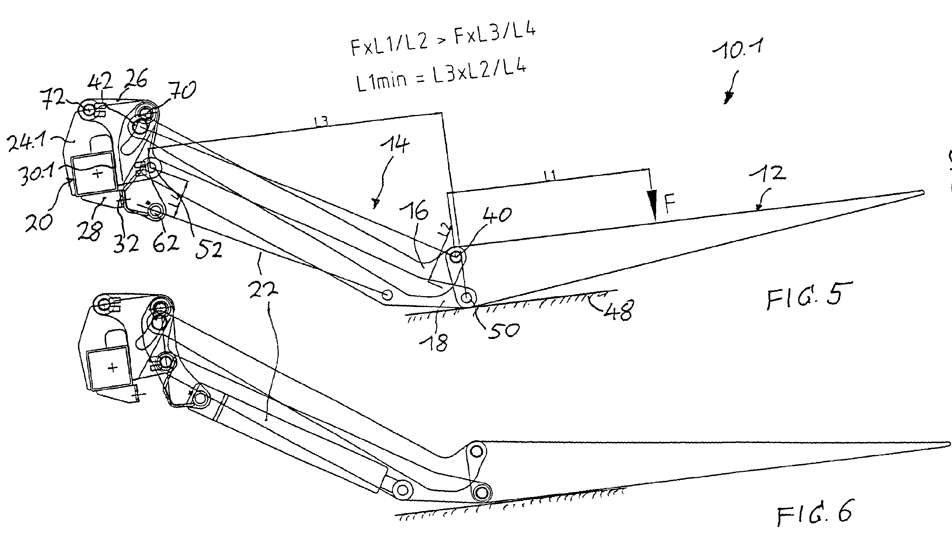

Gemäß Figur 2 befindet sich die Ladeplattform 12 in der geöffneten, angehobenen Stellung. Durch Einfahren des Zylinders des Kolben-Zylinder-Aggregats 22 führt die Ladeplattform 12 eine Absenkbewegung durch, wobei die horizontale Position der Ladeplattform 12 erhalten bleibt. Sobald die Ladeplattform 12 in der Absenkbewegung den Boden 48 erreicht hat, neigt sich die Spitze 54 der Ladeplattform 12 unter der Wirkung ihres Eigengewichts oder der Last parallel zum Boden 48 ab (siehe Figur 5 und 6). Dies ist dadurch möglich, dass die Gelenkkonsole 28, die während des Öffnungs- beziehungsweise Schließ- beziehungsweise Senkbeziehungsweise Hebevorgangs gegen einen fahrzeugfesten Anschlag 32 gepresst wird, nunmehr hinsichtlich ihrer Drehung freigeschaltet ist und dadurch die Absenkung der Spitze 54 der Ladeplattform 12 möglich ist. Diese Absenkbewegung gehört zum Stand der Technik und hat sich seit Jahren bewährt. In Figur 5 ist die einzuhaltende Größe hinsichtlich der Abmessungen der Hebel L1, L2, L3 und L4 formalmäßig dargestellt. Bei einer derartigen Geometrie der Hebel ist ein automatisches Absenken der Spitze 54 der Ladebordwand 12 jederzeit gewährleistet.

Erfindungswesentlich ist der Einsatz des genannten Kolben-Zylinder-Aggregats nicht nur zum Heben und Senken der Ladeplattform 12, sondern auch zum Öffnen und Schließen derselben. Dieser Zustand wird durch Gegenüberstellung der Figuren 1 und 2 deutlich. Der Einsatz nur eines Kolben-Zylinder-Aggregats 22 auch zum Schließen der Ladeplattform 12 gegenüber dem Fahrzeugaufbau wird dadurch möglich, dass das vierte Gelenk 52 an der drehbaren Schließkonsole 26 gelagert ist. Nachdem die Ladeplattform 12 sich in dem geöffneten, nicht abgesenkten Zustand befindet (Figur 2), wird zum Schließen derselben die Kolbenstange des Kolben-Zylinder-Aggregats 22 ausgefahren, wodurch der 4-Gelenkmechanismus 14 aufgrund des weiteren Freiheitsgrades des vierten Gelenks 52 sich gemäß Figur 1 verschiebt und sich dadurch die Ladeplattform 12 in die vertikale Schließstellung bewegt. Die gesteuerte Bewegung des vierten Gelenks 52 durch die Drehung der Schließkonsole 26 um den achten Gelenkpunkt 52 während des Schließvorgangs ist in Figur 1 durch den Pfeil P schematisch dargestellt.

Die geometrischen Abmessungen des 4-Gelenkmechanismus 14 sind dabei so gewählt, dass während des Hebe- und Senkvorgangs der Ladeplattform 12 das vierte Gelenk 52 beziehungsweise die Schließkonsole 26.1 gegen einen fahrzeugfesten ersten Anschlag 30.1 gepresst wird, währendhingegen bei Erreichen der nicht abgesenkten, oberen Öffnungsstellung gemäß Figur 2 die Drehbewegung der Schließkonsole 26.1 um das achte Gelenk 72 freigegeben wird und dadurch der Schließvorgang insgesamt ermöglicht wird, wodurch sich der Gelenkmechanismus von einer ursprünglichen parallelogrammartigen Anordnung zu der in Figur 1 dargestellten Anordnung verschiebt. Dies wird dadurch unterstützt, dass bei Erreichen der oberen geöffneten Position gemäß Figur 2 der erste Gelenkpunkt 40 an einem hinteren Anschlag 34 am Fahrzeug fixiert wird, der sich üblicherweise an der Stirn- beziehungsweise Unterkante der Ladefläche 58 des Fahrzeuges befindet.

Die konstruktive Umsetzung des statischen Systems gemäß den Figuren 1 und 2 ist in den Figuren 3 bis 12 dargestellt.

Die Trageinrichtung 20 wird im Beispiel repräsentiert durch ein quadratisches Hohlprofil. An dieses Hohlprofil ist eine Gelenklagereinheit 24.1 angeschlossen, die oberseitig gemäß Figur 11b im rechten vorderen Teil den Anschluss für das siebte Gelenk 70 für die Gelenkkonsole 28 und im oberen linken Bereich den Anschluss für das achte Gelenk 72 für die Schließkonsole 26.1 darstellt. Unterseitig an der Trageinrichtung 20 befindet sich der Anschlag 32 für die Gelenkkonsole 28. Der Anschlag 30.1 für die Schließkonsole 26 ist die Trageinrichtung 20 selbst.

Alle Gelenkkonstruktionen werden umgesetzt durch Bolzenbeziehungsweise durch Schraubbolzenverbindungen.

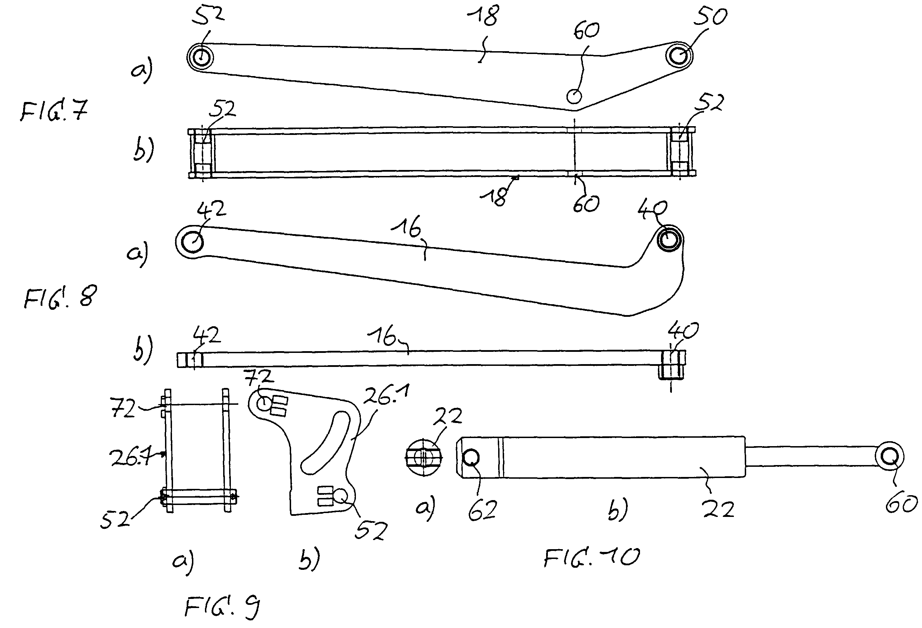

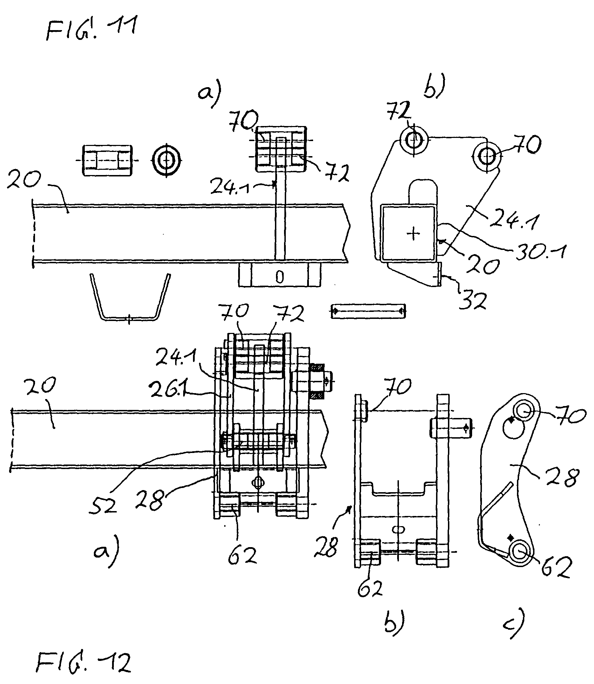

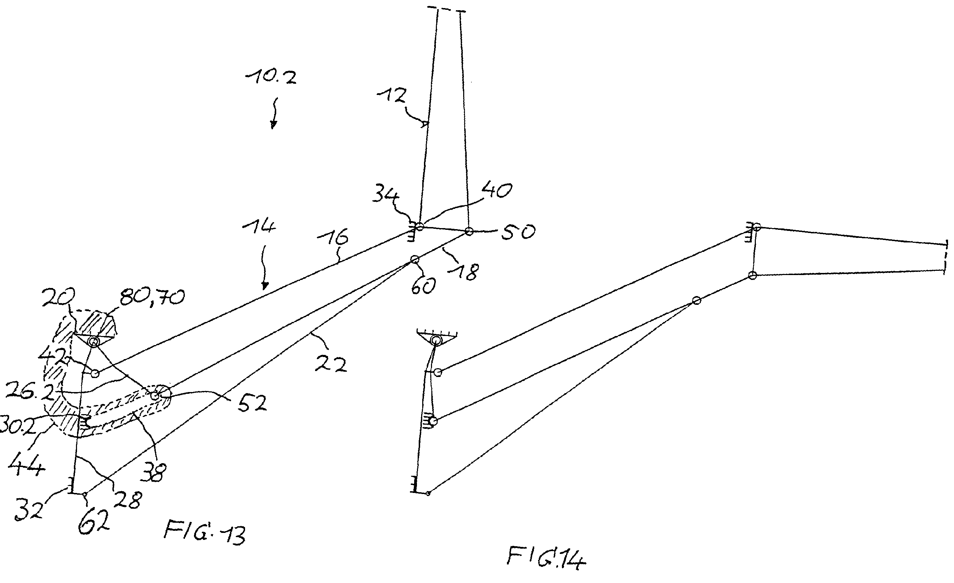

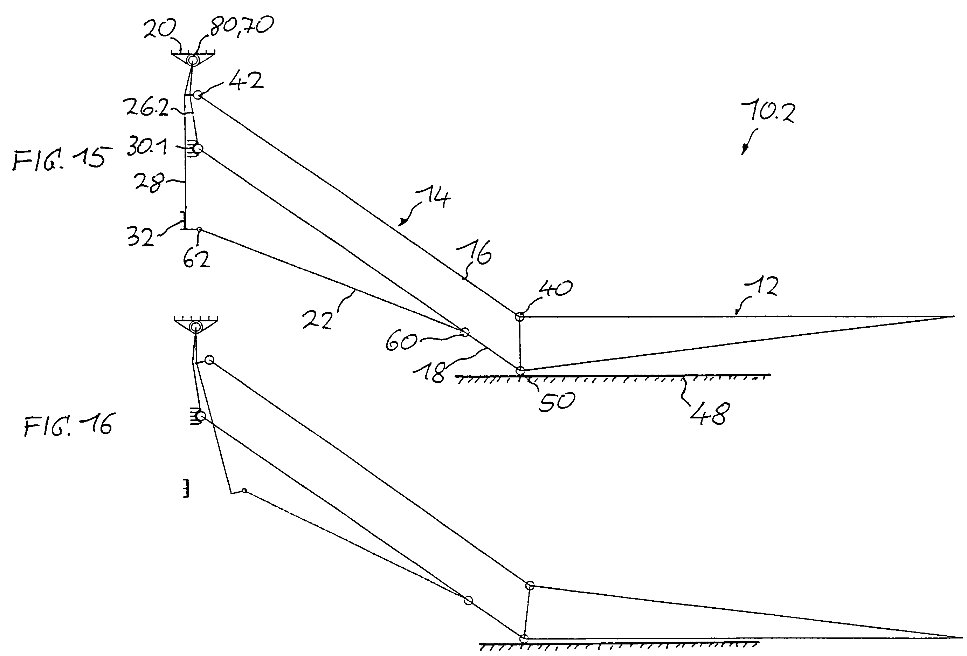

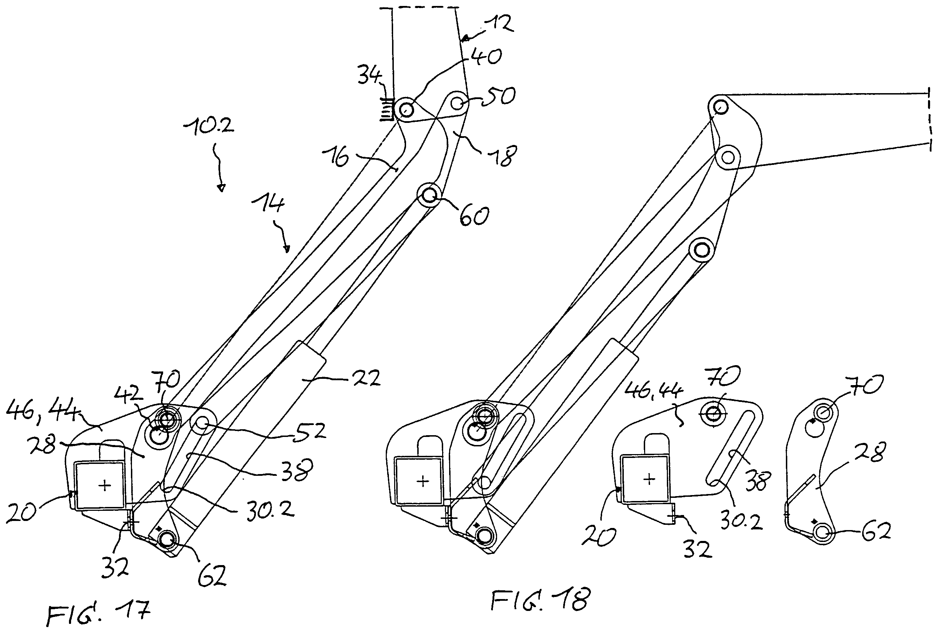

Gemäß Figur 7a beziehungsweise b ist der Unterarm 18 in dem dargestellten Ausführungsbeispiel als doppelarmige Schwinge ausgebildet. Der Oberarm 16 gemäß Figur 8a und b ist in seinem Querschnitt als rechteckförmige Schwinge mit einer an seinem freien Endbereich (Anschluss zur Ladeplattform 12) vorhandenen Kröpfung.

Aufgrund der kompakten Bauweise bildet die Gelenkkonsole 28 den äußeren Umfang zum gelenkigen Anschluss des unteren Arms 18 und des oberen Arms 16. Gleichzeitig ist innerhalb der Gelenkkonsole 28 die Schließkonsole 26.1 und das Kolben-Zylinder-Aggregat 22 angeordnet beziehungsweise angeschlossen (siehe Figur 12a).

In den Figuren 13 und 14 ist eine zweite und dritte Ausführungsvariante gemäß dem statischen System der Hubladebühnenvorrichtung 10.2 beziehungsweise 10.3 dargestellt, wobei gemäß der dritten Ausführungsvariante in den Figuren 17 und 18 eine konstruktive Umsetzung dargestellt ist.

Bei der zweiten Ausführungsvariante gemäß den Figuren 13 und 14 tragen gleiche Bauteile das gleiche Bezugszeichen wie im vorgenannten Ausführungsbeispiel und werden nicht nochmals ausführlich beschrieben. Ein Unterschied hinsichtlich der ersten Ausführungsvariante 10.1 besteht darin, dass eine Gelenkkonsole 28 und eine Schließkonsole 26.2 vorhanden sind, die über ein gemeinsames Gelenk 80 an der Trageinrichtung 20 angeschlossen sind.

Eine alternative Ausgestaltung einer dritten Ausführungsvariante ist in den Figuren 13 und 14 gestrichtelt dargestellt, wobei deren konstruktive Umsetzung den Figuren 17 und 18 zu entnehmen ist.

Im Unterschied zu den oben beschriebenen Ausführungsvarianten zeichnet sich die dritte mögliche Ausführungsform dadurch aus, dass eine Schließkonsole 44 eingesetzt wird, die fest mit der Trageinrichtung 20 verbunden ist und als Gelenklagereinheit 46 ausgebildet ist. Die Schließkonsole 44 weist ein Langloch 38 auf, innerhalb dessen das vierte Gelenk 52 des Unterarms 18 verschieblich vorhanden ist. Die Verschieblichkeit des vierten Gelenks 52 ist innerhalb des Langlochs 38 jedoch nur dann gegeben, wenn das Kolben-Zylinder-Aggregat 22 die Ladeplattform 12 von der Öffnungsin die Schließposition oder umgekehrt bewegt. Während des Hebe- beziehungsweise Senkvorgangs wird das vierte Gelenk 52 gegen den unteren Anschlag 30.2 innerhalb des Langlochs 38 gepresst.

Mit der erfindungsgemäßen Hubladebühnenvorrichtung wird ein Bewegungsvorgang hinsichtlich des Öffnens, des Schließens, des Hebens und des Senkens lediglich durch Einsatz eines Kolben-Zylinder-Aggregats pro Gelenkmechanismus ermöglicht. Durch Vorsehen einer derartigen Konstruktion auf beiden Seiten der Ladeplattform 12 wird eine exzentrische Lasteinleitung vermieden, sodass zusätzliche mechanische oder sonstige Bauteile zum Ausgleich der bei exzentrischer Last auftretenden Verformungen vollständig entfallen können.

Dadurch wird eine extrem leichte, dauerhaft funktionell arbeitende und wirtschaftlich herstellbare Hubladebühnenvorrichtung zur Verfügung gestellt.

## Patentansprüche

1. Hubladebühnenvorrichtung (10.1; 10.2), insbesondere für Fahrzeuge, mit
- einer Ladeplattform (12),
- zumindest einem zwischen der Ladeplattform (12) und einer Trageinrichtung (20) eines Fahrzeugs angeordneten 4-Gelenkmechanismus (14) mit
-- einem Oberarm (16), der über ein erstes Gelenk (40) an die Ladeplattform (12) und über ein zweites Gelenk (42) an die Trageinrichtung (20) direkt oder indirekt angelenkt ist, und
-- einem Unterarm (18), der über ein drittes Gelenk (50) an die Ladeplattform (12) und über ein viertes Gelenk (52) an die Trageinrichtung (20) direkt oder indirekt angelenkt ist,
- wobei die Bewegung der Ladeplattform (12) - Öffnen, Schließen, Heben, Senken - über auf den Gelenkmechanismus (14) einwirkende, ansteuerbare Kolben-Zylinder-Aggregate (22) bewirkt wird, und jeweils nur ein einziges Kolben-Zylinder-Aggregat (22) pro Gelenkmechanismus (14) vorhanden ist, das die Öffnungs- beziehungsweise Schließbewegung und die Senk- beziehungsweise Hebebewegung bewirkt,
**dadurch gekennzeichnet, dass**
- das Kolben-Zylinder-Aggregat (22) über ein fünftes Gelenk (60) an den Unterarm (18) und über ein sechstes Gelenk (62) an die Trageinrichtung (20) direkt oder indirekt angelenkt ist und das vierte Gelenk (52) des Unterarms (18) während der Hebe- beziehungsweise Senkbewegung der Ladeplattform (12) gegen einen Anschlag (30.1; 30.2) gepresst wird und während der Schließbeziehungsweise Öffnungsbewegung der Ladeplattform (12) bewegbar ausgebildet ist, wobei
- das vierte Gelenk (52) des Unterarms (18) an einer an der Trageinrichtung (20) direkt oder indirekt drehbar um ein achtes Gelenk (72) gelagerten Schließkonsole (26.1; 26.2) angeordnet ist, wobei die Drehung der Schließkonsole (26.1; 26.2) nur während der Öffnungsbeziehungsweise Schließbewegung der Ladeplattform (12) möglich ist und die Schließkonsole (26.1; 26.2) während der Hebe- beziehungsweise Senkbewegung gegen einen Anschlag (30.1; 30.2) gepresst wird, oder
- das vierte Gelenk (52) des Unterarms (18) in einem Langloch (38) einer fest an der Trageinrichtung (20) angeschlossenen Schließkonsole (44) gelagert ist, wobei die Verschiebung des vierten Gelenks (52) innerhalb des Langlochs (38) nur während der Öffnungs- beziehungsweise Schließbewegung der Ladeplattform (12) möglich ist und das vierte Gelenk (52) bei der Hebe- beziehungsweise Schließbewegung der Ladeplattform gegen einen Anschlag (30.2) gepresst wird.

2. Hubladebühnenvorrichtung nach Anspruch 1,
**dadurch gekennzeichnet, dass** eine um ein siebtes Gelenk (70) drehbar an der Trageinrichtung (20) gelagerte Gelenkkonsole (28) vorhanden ist, an der das sechste Gelenk (62) des Kolben-Zylinder-Aggregats (22) angeschlossen ist, wobei während der Öffnungs- beziehungsweise Schließbewegung der Ladeplattform (12) die Gelenkkonsole (28) gegen einen zweiten Anschlag (32) gepresst wird und die Drehbarkeit der Gelenkkonsole (28) bei auf den Boden abgesenkter Ladeplattform (12) möglich ist zum Absenken der Spitze (54) der Ladeplattform (12) unter Eigengewicht beziehungsweise Last.

3. Hubladebühnenvorrichtung nach Anspruch 2,
**dadurch gekennzeichnet, dass**
das siebte Gelenk (70) und das achte Gelenk (72) getrennt an der Trageinrichtung (20) beziehungsweise an einer an der Trageinrichtung (20) angeschlossenen Gelenklagereinheit (46) angeschlossen ist.

4. Hubladebühnenvorrichtung nach Anspruch 2,
**dadurch gekennzeichnet, dass**
das siebte Gelenk und das achte Gelenk ein gemeinsames Gelenk (80) bilden, das an einer Gelenklagereinheit (46) an der Trageinrichtung (20) angeordnet ist.

5. Hubladebühnenvorrichtung nach einem oder mehreren der vorstehenden Ansprüche,
**dadurch gekennzeichnet, dass**
zwei symmetrische zur Längsachse des Fahrzeugs parallel beabstandet angeordnete Gelenkmechanismen (14) mit jeweils einem Kolben-Zylinder-Aggregat (22) vorhanden sind.

6. Hubladebühnenvorrichtung nach einem oder mehreren der vorstehenden Ansprüche,
**dadurch gekennzeichnet, dass**
das Kolben-Zylinder-Aggregat (22) als Zug-/Druck-Zylinder ausgebildet ist.

7. Hubladebühnenvorrichtung nach einem oder mehreren der vorstehenden Ansprüche,
**dadurch gekennzeichnet, dass** das Kolben-Zylinder-Aggregat hydraulisch, pneumatisch oder elektrisch betreibbar ausgebildet ist.

8. Hubladebühnenvorrichtung nach einem oder mehreren der vorstehenden Ansprüche,
**dadurch gekennzeichnet, dass**
die Konstruktion der Gelenke als Bolzen- oder Schraubbolzenkonstruktion ausgebildet ist.

9. Hubladebühnenvorrichtung nach einem oder mehreren der vorstehenden Ansprüche,
**dadurch gekennzeichnet, dass**
das Kolben-Zylinder-Aggregat nur als Druckzylinder wirkt und das Öffnen der Plattform durch Federkraft bewirkt wird.
